# EUROPEAN PATENT SPECIFICATION

(11) **EP 3 544 275 B1**
(45) Date of publication and mention of the grant of the patent: **05.08.2026**
(21) Application number: 19158725.2
(22) Date of filing: 29.04.2016
(51) Int. Cl.: H04M 9/08

(54) **DEVICE AND METHOD FOR CANCELING NOISE IN A RECEIVED SIGNAL**
VORRICHTUNG UND VERFAHREN ZUR UNTERDRÜCKUNG VON RAUSCHEN IN EINEM EMPFANGENEN SIGNAL
DISPOSITIF ET PROCÉDÉ D'ANNULATION DU BRUIT DANS UN SIGNAL REÇU

(43) Date of publication of application: 25.09.2019
(62) Divisional of application: 16167713.3
(73) Proprietor: MaxLinear Asia Singapore Private Limited, Singapore 556741 (SG)
(72) Inventor: SURESH, Krishnaswamy, 560013 Bangalore (IN); DASALUKUNTE, Deepak, 560040 Bangalore (IN); BHATIA, Puneet, 560017 Bangalore (IN); KOLENDAVELU, Manivannan, 560102 Bangalore (IN)
(74) Representative: Kraus & Lederer PartGmbB

(56) References cited:
- WO-A2-2012/116147
- US-A- 5 740 256
- US-A1- 2006 271 765
- US-A1- 2009 055 005

## Description

### TECHNICAL FIELD

Present invention relates to a device and to a method arranged to cancel noise in a received signal. Additionally, the present invention relates to a corresponding computer program product and to a corresponding computer-readable recording media.

### BACKGROUND

In the area of communication technology, when voice or sound signals are transmitted, unwanted sound signals referred to as noise are added to the original voice or sound signal. Different sources of noise are present. They may comprise, for example, environment noise or noise occurring during the signal transmission, e.g. cross talk noise.

Several method for canceling noise exist. One of them is active noise cancellation (ANC) or active noise reduction (ANR) that reduces noise by adding an anti-noise signal such that the noise signal is canceled. A commonly used algorithm for ANC is least mean square (LMS) or delayed LMS. The hardware/software architecture used for execution of this algorithm comprises memories, used to store input data (victims and disturbers) and coefficients used for filtering and cancelling the noise, and multiply-and-accumulate (MAC) units for computation of the anti-noise signal and for adding the anti-noise signal to the victim data.

However, the ANC approach is application specific. For high performance applications like Broadband, hardware accelerators are used. Additionally, also digital signal processors (DSPs) are used in case of low performance applications such as wind noise cancellation in mobile phones, for example.

Thus, a need for a more generic and application independent noise cancellation technique still exists.

### SUMMARY

The present invention provides an improved noise cancellation technique. In particular, a more generic and application independent noise cancellation is enabled.

The invention is defined in the independent claims, wherein further exemplary and supplementing embodiments are specified in dependent claims as well as in the present description and attached figures.

### BRIEF DESCRIPTION OF THE DRAWINGS

In the following, embodiments of the present invention are described with reference to accompanying drawings in which the same or similar reference numerals designate the same or similar elements.
FIG. 1 is a block diagram of a device arranged to cancel noise present in a received signal according to an embodiment of the present invention.
FIG. 2 is a block diagram of a coefficient memory according to an embodiment of the present invention.
FIG. 3 is a block diagram of a disturber memory according to an embodiment of the present invention.
FIG. 4 is a block diagram of a set of MAC units according to an embodiment of the present invention.
FIG. 5 is a block diagram of a device arranged to cancel noise present in a received signal according to an embodiment of the present invention.
FIG. 6 is a block diagram of a coefficient memory according to an embodiment of the present invention.

### DETAILED DESCRIPTION OF EMBODIMENTS

In the following, exemplary embodiments of the present invention are described with reference to the attached drawings. Features of the various exemplary embodiments may be combined with each other unless specifically stated otherwise.

As can be gathered from the above summary, the present invention allows a dynamic use of parameters for cancelation of noise present in a received signal. In particular, noise cancellation coefficients are provided to a multiply-and-accumulate unit according to settings and/or configurations of a device. The settings/configurations comprise, in particular, a set of victims (at least one victim) selected from a plurality of victims, a set of disturbers (at least one disturber) selected from a plurality of disturbers and/or a set of tones (at least one tone) selected from a plurality of tones, wherein the victim(s), disturber(s) and tone(s) are capable of causing noise in a transmitted and subsequently received signal. Thus, a plurality of different potential sources of noise are considered. The received signal is processed with regard to selected potential sources of noise, wherein, with regard to each of the different potential sources as selected, a multiply-and-accumulate (MAC) unit executes a noise cancelation by generating a corresponding noise cancelation signal.

The settings/configuration can be changed, adapted and/or updated as required. I.e., the device arranged to cancel noise present in a received signal can be re-configured again and again with regard to current circumstances that may cause noise. The selection of the potential sources of noise is executed in an application-independent way.

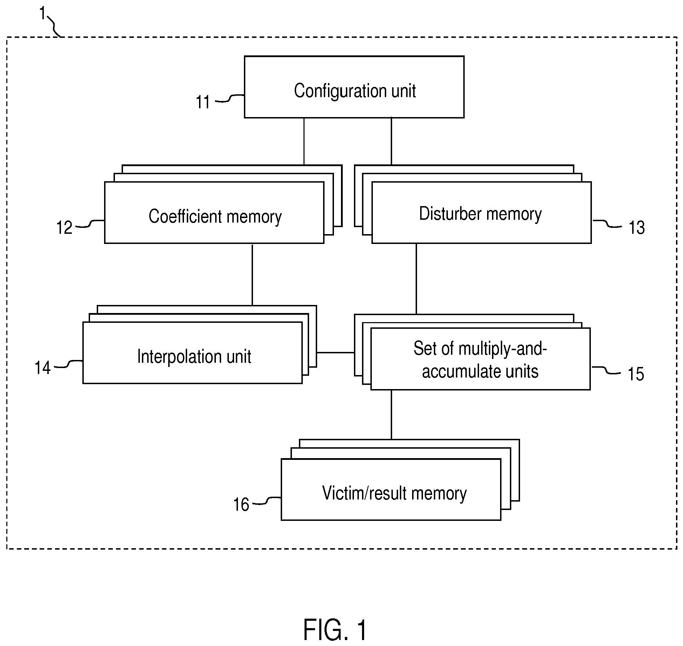

FIG. 1 is a block diagram of device 1 arranged to cancel noise present in a received signal according to an embodiment of the present invention.

According to the embodiment of FIG. 1, device 1 comprises a configuration unit 11 that prepares device 1 for noise cancellation in received signals according to a desired configuration. In particular, configuration unit 11 is configured to perform a base configuration and/or reconfiguration of device 1. According to the present embodiment, configuration unit 11 is configured to select at least one of the following and to configure device 1 by use of at least one of the following: a (maximum) number of victims, with regard to which device 1 can execute the cancellation of noise during the same noise cancellation process; a (maximum) number of tones, with regard to which device 1 can execute the cancelation of noise during the same noise cancellation process; a (maximum) number of disturbers, with regard to which device 1 can execute the cancelation of noise during the same noise cancellation process; an interpolation factor; an interpolation mode; a precision degree of data to be supported by device 1; settings for compression of data when said data is stored in device 1 and settings for decompression of stored data when said stored data is used in device 1.

The precision degree specifies a computer number format for occupying a particular number of bytes or bits in memory and for representing a wide, dynamic range of values by using a floating point. Such computer number formats are well known. For example, a full precision (32 bit) or half precision (16 bit) format can be selected by configuration unit 1 for computations executed by device 1 (e.g. interpolation unit 14 and/or multiply-and-accumulate (MAC) unit 15. Settings for compression and decompression of data can be selected, if a memory space saving storage of data in device 1 is desired, according to which data to be stored is compressed and stored data is decompressed for further processing.

After the execution of the settings, the configuration unit 11 configures or re-configures, i.e. adjusts device 1 and, in particular, further components of device 1 according to the settings such that subsequent noise cancellation is executed in device 1 by use of said settings. As can be gathered from Fig. 1, said settings configure the operating of coefficient memories 12, disturber memories 13, interpolation units 14, sets of MAC units 15 and victim/result memories 16.

According to embodiment of FIG. 1, noise cancelation is executed on victim basis. This means that victims define the organization of data like disturbers and coefficients, and the execution of noise cancellation is executed with regard to each victim of a number of victims separately. The (maximum) number of victims that may be handled by device 1 during the same noise cancellation process can be set during the configuration process. In particular, said setting of the (maximum) number of victims and the corresponding configuration of device 1 are executed by configuration unit 11.

For executing a victim based noise cancelation, according to the present embodiment, a dedicated memory for every victim of said number of victims is used. Thus, a number of coefficient memories 12 is provided, wherein each coefficient memory 12 stores noise cancellation coefficients of a corresponding victim. Similarly, a number of disturber memories 13 is provided, wherein each disturber memory 13 stores information on disturbers of a corresponding victim. Additionally, a number of victim/result memories 16 is provided, wherein each victim/result memory 16 stores victim data and results of noise cancellation of a corresponding victim. According to an embodiment, the distribution and/or allocation of corresponding disturber memories 13 and coefficient memories 12 can be done after or during the configuration process executed by the configuration unit 11 in response to the set maximum number of victims that may be handled by device 1 during the same noise cancellation process.

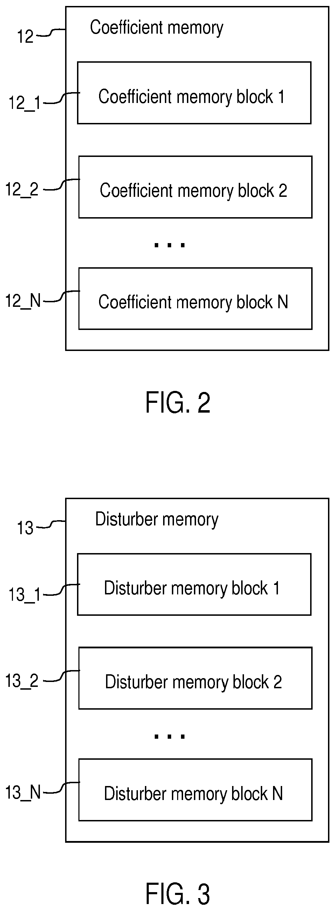

FIG. 2 is a block diagram of coefficient memory 12 of the number of coefficient memories according to an embodiment of the present invention.

According to the embodiment of FIG. 2, coefficient memory 12 comprises a set of coefficient memory blocks or buffers 12_1, 12_2, ..., 12_N. In each coefficient memory block 12_1, 12_2, ..., 12_N, a base set of noise cancellation coefficients is stored that is used for noise cancellation. The noise cancellation coefficients are grouped according to tones of the victim, with regard to which coefficient memory 12 is provided. Thus, each buffer 12_1, 12_2, ..., 12_N comprises a base set of coefficients for noise cancellation with regard to a corresponding or particular tone of the victim, with regard to which coefficient memory 12 is used or with which coefficient memory 12 is associated.

Thus, the number N of coefficient memory blocks 12_1, 12_2, ..., 12_N corresponds or is equal the number of tones of the corresponding victim. In general, N is a natural that is equal or greater than one (N ≥ 1). The maximum number of tones that can be handled by device 1 with regard to a victim can be set and configured via the configuration unit 11. Hence, according to an embodiment, the distribution and/or allocation of corresponding coefficient memory blocks 12_1, 12_2, ..., 12_N can be done after or during the configuration process executed by the configuration unit 11 in response to the set maximum number of tones that may be handled by device 1 for a victim during the same noise cancellation process.

FIG. 3 is a block diagram of disturber memory 12 of the number of disturber memories according to an embodiment of the present invention.

According to the embodiment of FIG. 3, disturber memory 13 comprises a set of disturber memory blocks or buffers 13_1, 13_2, ..., 13_N. In each disturber memory block 13_1, 13_2, ..., 13_N, a set of disturbers is stored that is used for noise cancellation. According to an embodiment, the size of the set of disturbers is limited by a maximum number of disturbers. According to an embodiment, the maximum number of disturbers is set by configuration unit 11. The disturbers are grouped according to tones of the victim, with regard to which disturber memory 13 is provided. Thus, each buffer 13_1, 13_2, ..., 13_N comprises a set of disturbers of a corresponding or particular tone of the victim, with regard to which disturber memory 13 is used or with which disturber memory 13 is associated.

Thus, the number N of disturber memory blocks 13_1, 13_2, ..., 13_N corresponds or is equal the number of tones of the corresponding victim. In general, N is a natural that is equal or greater than one (N ≥ 1). As mentioned, the maximum number of tones that can be handled by device 1 with regard to a victim can be set and configured via the configuration unit 11. Hence, according to an embodiment, the distribution and/or allocation of corresponding disturber memory blocks 13_1, 13_2, ..., 13_N can be done during the configuration process executed by the configuration unit 11 in response to the set maximum number of tones that may be handled by device 1 for a victim during the same noise cancellation process.

In order to keep the storage requirement for the noise cancellation coefficients low and thus to save required memory space, according to the present embodiment, the noise cancellation coefficients stored in coefficient memories 13 are decimated to base or grid noise cancellation coefficients, and an interpolation unit 14 is used for the regeneration of the intermediate noise cancellation coefficients, i.e. noise cancellation coefficients that are placed between the base noise cancellation coefficients. As generally known, interpolation is a method of constructing new data points within the range of a discrete set of known data points. Thus, according to the present embodiment interpolation unit 14 uses a base set of noise cancellation coefficients for generating or constructing further intermediate noise cancellation coefficients. Between two base noise cancellation coefficients, one or more intermediate noise cancellation coefficients are present. Interpolation unit 14 determines said intermediate cancellation coefficients.

Thus, according to present embodiment, corresponding sets of base or grid noise cancellation coefficients are stored in coefficient memories 12. Interpolation unit 14 regenerates, i.e. interpolates intermediate noise cancellation coefficients from a base or grid set of noise cancellation coefficients. Subsequently, the noise cancellation is executed by use of a set of noise cancellation coefficients comprising both the base set of noise cancellation coefficients and the corresponding set of interpolated or intermediate noise cancellation coefficients.

Interpolation unit 14 fetches or retrieves a base or grid set of noise cancellation coefficients from coefficient memory 12 and generates interpolated coefficients according to an interpolation factor. According to an embodiment, the interpolation factor is configured by configuration unit 11 such that interpolation unit 14 uses the interpolation factor as set during the configuration process. For example, if interpolation factor is 8, interpolation unit 14 generates 8 interpolated noise cancellation coefficients with regard to two base or grid noise cancellation coefficients. According to an embodiment, interpolation unit functions according to a particular interpolation mode. Also the interpolation mode is configurable by configuration unit 11. According to an embodiment, the interpolation mode comprises a coefficient repetition mode or a linear interpolation mode. In the coefficient repetition mode, a repetition of coefficients is executed, i.e. each coefficient of the base or grid set of noise cancellation coefficients is repeated a predetermined or preset number of times. In the linear interpolation mode, a linear interpolation is executed. In the linear interpolation, the base or grid set of noise cancellation coefficients is used for generating further interpolated coefficients by generating (a preset number of) new/additional coefficients between two (subsequent) coefficients of the base or grid set of noise cancellation coefficients. According to an embodiment, the linear interpolation comprises execution of one or more known linear interpolation approaches. For example, according to an embodiment polynomial and/or bilinear interpolation are/is executed.

Because according to the present embodiment noise cancellation is executed with regard to each victim separately, a number of interpolation units 14 is provided, wherein each interpolation unit 14 is associated with a corresponding victim, i.e. processes noise cancellation coefficients of the corresponding victim. Thus, the number of interpolation units 14 is adjusted by configuration unit 11 when the maximum number of victims that can be processed by device 1 is set.

Thus, for each coefficient memory block or buffer 12_1, 12_2, ..., 12_N of coefficient memory 12 of the corresponding victim, interpolation unit 12 fetches a base set of noise cancellation coefficients from the corresponding coefficient memory block or buffer 12_1, 12_2, ..., 12_N and generates a corresponding set of intermediate noise cancellation coefficients.

Then a set of noise cancellation coefficients, comprising the interpolated noise cancellation coefficients and coefficients from the base set of noise cancellation coefficients, is provided to a set of multiply-and-accumulate (MAC) units 15. According to the present embodiment, for each victim, a corresponding set of MAC units 15 is provided. Thus, the interpolation unit 14, operating with regard to a victim, provides to a set of (MAC) units 15 that operates with regard to said victim each set of noise cancellation coefficients received by the interpolation of the corresponding base set of noise cancellation coefficients, which is stored in coefficient memory 12 of said victim, in particular in a corresponding coefficient memory block 12_1, 12_2, ..., 12_n of said coefficient memory 12.

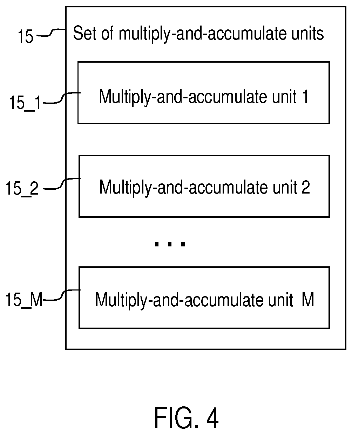

FIG. 4 is a block diagram of a set of MAC units 15 of the number of sets of MAC units 15 according to an embodiment of the present invention.

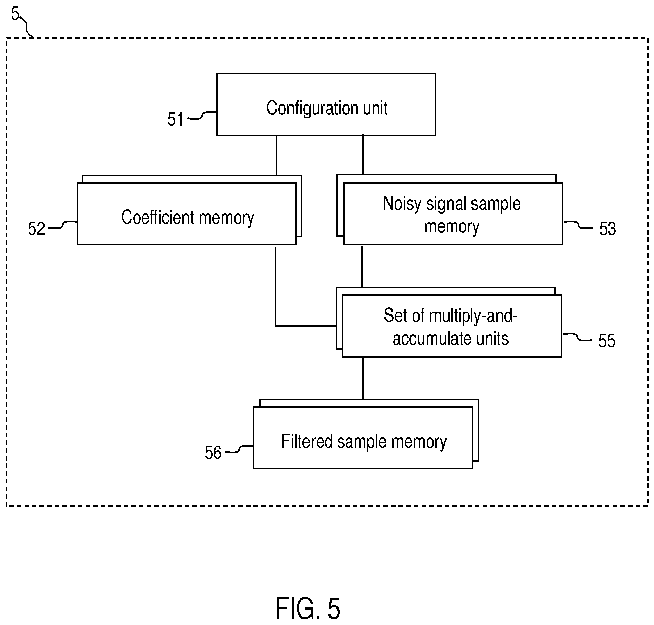

According to the embodiment of FIG. 5, the set of MAC units 15 comprises M MAC units 15_1, 15_2, ..., 15_M configured to execute noise cancelation with regard to one particular or corresponding victim. Each MAC unit 15_1, 15_2, ..., 15_M is configured to receive a set of noise cancellation coefficients from interpolation unit 14 operating with regard to the same victim as MAC unit 15_1, 15_2, ..., 15_M and a set of disturbers from disturber memory 13 storing disturbers of the said victim.

According to the embodiment, each MAC unit 15_1, 15_2, ..., 15_M is configured to cancel noise with regard to a particular or corresponding tone of its victim. Thus, the set of noise cancellation coefficients received from interpolation unit 14 comprises coefficients arranged to cancel noise with regard to the corresponding tone of said victim. The set of noise cancellation coefficients comprises, in turn, coefficients obtained by interpolation unit 14 based on a base set of noise cancellation coefficients that are stored in a coefficient memory block 12_1, 12_2, ..., 12_N referring to said tone of said victim. The set of disturbers received by MAC unit 15_1, 15_2, ..., 15_M refers also the said tone of said victim and is received from a disturber memory block 13_1, 13_2, ..., 13_N referring to said tone of said victim.

Thus, each MAC unit 15_1, 15_2, ..., 15_M is configured to cancel noise with regard to noise cancellation coefficients and disturbers that refer to the same victim and to the same tone as said MAC unit 15_1, 15_2, ..., 15_M.

In general, M is a natural that is equal or greater than one (M ≥ 1). According to an embodiment, M is equal or smaller than 8, and a set of MAC units 15 comprises, e.g., up to 8 MAC units 15_1, 15_2, ..., 15_M. The number of MAC units 15_1, 15_2, ..., 15_M can be set and configured via the configuration unit 11.

In general, a MAC unit 15_1, 15_2, ..., 15_M of a set of MAC units 15 may be arranged as any appropriate known MAC unit used for noise cancellation. Generally, MAC unit 15_1, 15_2, ..., 15_M is a hardware unit that executes a multiply-accumulate operation comprising computations on products of two numbers and adding that products to an accumulator. Thus, MAC unit 15_1, 15_2, ..., 15_M uses the noise cancellation coefficients and determines a noise cancellation signal in view of a corresponding victim, a corresponding tone and corresponding disturbers.

Each MAC unit 15_1, 15_2, ..., 15_M receives a set of noise cancellation coefficients and retrieves the corresponding set of disturbers from the corresponding disturber memory block 13_1, 13_2, ..., 13_N such that both the coefficients and disturbers refer not only to the same victim but also to the same tone. Subsequently, MAC unit 15_1, 15_2, ..., 15_M multiplies the received noise cancellation coefficients for all disturbers of the particular tone of the particular victim. As a result, MAC unit 15_1, 15_2, ..., 15_M provides a corresponding noise cancellation signal or anti-noise signal, respectively, that is generated with regard to a particular victim, with regard to a particular tone of the particular victim and with regard to disturbers of the particular tone of the particular victim.

In each set of MAC units 15, each MAC unit 15_1, 15_2, ..., 15_M cancels noise, i.e. determines the noise cancellation signal with regard to a tone that is different from the tones handled by any other MAC unit 15.

The number of sets of MAC units 15 corresponds to or is equal the maximum number of victims that can be selected for noise cancellation by configuration unit 11, as described above.

After the completion of computations for every tone of a victim in a set of MAC units 15 operating with regard to the victim, either an accumulated result, comprising accumulated results (i.e. noise cancelation signals) of each MAC unit 15_1, 15_2, ..., 15_M of said set 15, can be stored in the result memory 16 or the corresponding tone of victim data is read and added to the canceled result and then stored. This is also configurable by configuration unit 11.

In case of the storage of the accumulated result, according to an embodiment, the cancellation result is stored. In particular, cancellation results, i.e. noise cancelation signals determined by the set of MAC units 15, i.e. MAC units 15_1, 15_2, ..., 15_M with regard to a particular victim are collected by victim/result memory 16. Subsequently, i.e. after completing the determining of cancelation results for the victim, a final cancellation result, i.e. final cancellation signal is calculated (e.g. by applying an accumulation function on the collected cancellation results/signals). The final cancellation result or the final cancellation signal is calculated by a computing unit comprising and/or connected to victim/result memory 16. The calculation is thus executed with regard to all disturbers of the victim.

In the second case of adding noise cancellation results/signals, according to an embodiment, with regard to each noise cancellation result/signal, provided by the set of MAC units 15, i.e. by a MAC unit 15_1, 15_2, ..., 15_M with regard to a particular victim, a stored noise cancellation result/signal, stored with regard to the victim, is read from victim/result memory 16. Then, the noise cancellation result/signal is added to the stored noise cancellation result/signal, and the result of said addition is stored in victim/result memory 16 as the stored noise cancellation result/signal. Also here, the calculations are executed by a computing unit comprising and/or connected to victim/result memory 16. Said calculations are executed with regard to all disturbers of the victim. According to a further embodiment, this approach is executed if the set of MAC units 15 comprises one MAC unit 15_1, 15_2, ..., 15_M only, i.e. if M=1.

As mentioned, according to the present embodiment, several victim/result memories 16 are provided in device 1. For each victim, a corresponding victim/result memory 16 is provided. Thus, the number of victim/result memories 16 corresponds to the number of victims that have been selected for noise cancelation in the configuration process executed by configuration unit 11.

If disturbers are received over a period of time, according to an embodiment, the accumulated result for every interval is added to the previous one. Further, according to an embodiment, compression and decompression of the intermediate result are supported to keep the width of the memory low, i.e. to save the memory space. As outlined above, this can be also configured correspondingly by configuration unit 11.

According to the present embodiment, device 1 further comprises at least one interface (not shown) for receiving and/or transmitting configuration data, coefficient updates, and/or disturber, victim and/or tone data and or updates. Thus, via the at least one interface, noise cancelation coefficients (e.g. base sets of noise cancelation coefficients) for storage in coefficient memory 12, disturber information for storage in disturber memory 13, victim information for storage in victim memory 16 are received. Further, noise cancellation results (e.g., noise cancellation signals determined by MAC units or sets of MAC units 15) are transmitted to further components.

The at least one interface is implemented for accessing a communication media for transmission and/reception purposes. According to an embodiment, device 1 is connected for communication (i.e. reception and transmission) purposes to a data communication media such as a bus, for example. According to a further embodiment, the bus is an AXI (Advanced eXtensible Interface) bus. Here, also further kinds of data communication media and further kinds of buses can be used. Via the data communication media and the at least one interface, a parameterization or configuration of device 1 is executed, wherein corresponding configuration data is transmitted to configuration unit 11.

According to an embodiment, contention between the coefficient update through the at least one interface and coefficient access by MAC units 15_1, 15_2, ..., 15_M or sets of MAC units 15 is arbitrated. According to a further embodiment, access of MAC units 15_1, 15_2, ..., 15_M or sets of MAC units 15 to the coefficient data through the at least one interface (e.g., retrieval of coefficient data) has a higher priority in case of contention.

The above described embodiments can be used, for example, for frequency domain noise cancellation, e.g. with regard to signals received in frequency domain (e.g. by use of frequency division multiple access (FDMA)). At the same time, the above described embodiments of are not restricted with regard to the frequency domain noise cancelation and can be correspondingly applied and/or incorporated in any communication system and with regard to any noise cancelation.

In the following, embodiments that can be applied with regard to noise cancellation in signals received in time domain (e.g. by use of time division multiple access (TDMA)) will be explained in more detail. However, the above described embodiments of are not restricted with regard to the frequency domain noise cancelation and can be correspondingly applied and/or incorporated in any communication system and with regard to any noise cancelation.

FIG. 5 is a block diagram of device 5 arranged to cancel noise present in a received signal according to an embodiment of the present invention.

Device 5 comprises configuration unit 51, arrangement of which is similar to the arrangement of configuration unit 11 of FIG. 1.

In particular, configuration unit 51 is configured to perform a base configuration and/or re-configuration of device 5. According to the present embodiment, configuration unit 51 is configured to select at least one of the following and to configure the device 5 by use of at least one of the following: a (maximum) number of received signals comprising noise, with regard to which device 5 can execute the cancelation of noise during the same noise cancellation process; a (maximum) number of victims, with regard to which device 5 can execute the cancellation of noise during the same noise cancellation process; a (maximum) number of tones, with regard to which the device 5 can execute the cancelation of noise during the same noise cancellation process; a (maximum) number of disturbers, with regard to which the device 5 can execute the cancelation of noise during the same noise cancellation process; an interpolation factor; an interpolation mode; a precision degree of data to be supported by device 5; settings for compression of data when said data is stored in device 5 and settings for decompression of stored data when said stored data is used in device 5.

After the execution of the settings, the configuration unit 51 configures or re-configures, i.e. adjusts device 5 and, in particular, further components of device 5 according to the settings such that subsequent noise cancellation is executed in device 5 by use of said settings. As can be gathered from FIG. 5, said settings configure the operating of coefficient memories 52, noisy signal sample memories 53, sets of MAC units 55 and filtered sample memories 56.

According to embodiment of FIG. 5, noise cancelation is executed on basis of received signals comprising noise. This means that received noisy signals define the organization of data like coefficients and noisy samples of the received noisy signals, and the execution of noise cancellation is executed with regard to each received signal separately. The maximum number of received signals that can be processed by device 5 during the same noise cancellation process is set, according to an embodiment, during the configuration process. The setting of the maximum number of received signals and the corresponding configuration of device 5 are executed by configuration unit 51.

For executing noise cancelation based on received signals, according to the present embodiment, a dedicated memory for every received signal of said number of received signals is used. Thus, a number of coefficient memories 52 is provided, wherein each coefficient memory 12 stores noise cancellation coefficients of a corresponding received signal. Similarly, a number of noisy signal sample memories 53 is provided, wherein each noisy sample memory 53 stores samples of a corresponding received signal. Additionally, a number of filtered sample memories 56 is provided, wherein each filtered sample memory 56 stores results of noise cancellation executed with regard to a corresponding received signal. According to an embodiment, the distribution and/or allocation of corresponding coefficient memories 52, noisy signal sample memories 53 and/or filtered sample memories 56 can be done during the configuration process executed by the configuration unit 51 in response to the set maximum number of received signals that may be handled by device 5 during the same noise cancellation process.

According to the embodiment of FIG. 5, a number of coefficient memories 52 is provided, wherein each coefficient memory provides noise cancellation coefficients that are used for noise cancellation in a particular or corresponding received signal comprising noise. Thus, the number of coefficient memories 52 corresponds to or equals the maximum number of received signals that may be handled by device 5 during the same noise cancellation process. The arrangement of each coefficient memory 52 is different from the arrangements of coefficient memories 12 of FIGs. 1 and 2.

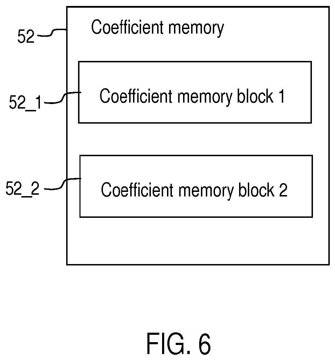

FIG. 6 is a block diagram of coefficient memory 52 according to an embodiment of the present invention. According to the embodiment, coefficient memory 52 is arranged in the form of "ping pong". In particular, coefficient memory 52 comprises two coefficient memory blocks or buffers 52_1, 52_2. According to the present embodiment, when one of the coefficient memory blocks 52_1, 52_2 is accessed by a corresponding MAC unit, another coefficient memory block 52_1, 52_2 is used to update noise cancellation coefficients for a subsequent processing by the MAC unit. Thus, after the MAC unit has finished noise cancelation based on noise cancellation coefficients of one of the two coefficient memory blocks 52_1, 52_2, it continues with the next noise cancelation step based on noise cancellation coefficients of the another one of the two coefficient memory blocks 52_1, 52_2. The one of the two coefficient memory blocks 52_1, 52_2 is not used by the MAC unit and can be updated with further noise cancellation coefficients for a subsequent processing by the MAC unit.

Further, device 5 comprises a number of noisy signal sample memories 53, wherein each noisy signal sample memory 53 is configured to store incoming samples of a corresponding received signal comprising noise. Thus, the number of noisy signal sample memories 53 corresponds to or is equal the maximum number of received signals that may be handled by device 5 during the same noise cancellation process.

Furthermore, device 5 comprises a number of sets of MAC units 55, wherein each set of MAC units 55 refers to or operates with regard to a corresponding received signal.

Each MAC unit of a set of MAC units 55, operating with regard to a particular or corresponding received signal, retrieves noisy signal sample data from noisy signal sample memory 53 that stores samples of the corresponding signal and retrieves noise cancellation coefficients from coefficient memory 52 storing coefficients with regard to the corresponding received signal. Subsequently, each MAC unit of a set of MAC units 55 processes the noise cancellation coefficients and noisy signal samples for canceling noise of the corresponding received signal. The processing can be executed as generally known with regard to MAC units.

For retrieving noise cancellation coefficients from the corresponding coefficient memory 52, corresponding coefficient memory blocks 52_1, 52_2 of coefficient memory 52 are accessed by MAC unit of the set of MAC units 55. Here, MAC unit applies to each noisy sample data consecutively several sets of noise cancellation coefficients, each retrieved by the MAC unit from a corresponding coefficient memory block 52_1, 52_2. As mentioned, the corresponding coefficient memory blocks 52_1, 52_2 are accessed alternately to retrieve the corresponding noise cancelation coefficients.

According to the present embodiment, accumulation of data in a MAC unit happens over a period determined by the order of the noise cancellation filter executed by the MAC unit. The order of the noise cancellation filter can be configured or set by configuration unit 51. Here, any known and appropriate noise cancellation filter can be implemented.

Each MAC unit returns filtered samples as the result of noise cancellation by the MAC unit. The filtered samples are then stored in filtered sample memory 56 that refers to a received signal, with regard to which the corresponding MAC unit operates.

According to an embodiment, only one MAC unit is provided within each set of MAC units 55.

Further, similar to device 1, also device 5 comprises at least one interface for accessing a communication media for transmission and/reception purposes. According to an embodiment, device 5 is connected for communication (i.e. reception and transmission) purposes to a data communication media such as a bus, for example. According to a further embodiment, the bus is an AXI (Advanced eXtensible Interface) bus. Here, also further kinds of data communication media and further kinds of buses can be used. Via the data communication media and the at least one interface, a parameterization or configuration of device 5 is executed, wherein corresponding configuration data is transmitted to configuration unit 51. The at least one interface is used for receiving, for example, coefficient, sample and received signal data. Further, configuration data is received via the at least one interface. Determined noise cancelation results, such as filtered samples and/or noise cancellation signals, for example, can be transmitted via the at least one interface to further components.

Thus, present invention relates to cancelation of noise present in received signals by use of a number of sets of multiply-and-accumulate units, wherein: each set of multiply-and-accumulate units of the number of sets of multiply-and-accumulate units is configured to cancel noise with regard to a corresponding victim, or each set of multiply-and-accumulate units of the number of sets of multiply-and-accumulate units is configured to cancel noise with regard to a corresponding received signal comprising noise. The number of sets of multiply-and-accumulate units corresponds to a maximum number of victims that can be processed during the same noise cancellation processor to a maximum number of received signals comprising noise that can be processed during the same noise cancellation process.

It has to be noted that although above presented embodiments referring in general to embodiment of FIG. 1 or to embodiment of FIG. 5 are presented in a separate way, for sake of better understanding, an implementation that combines both embodiments is possible. Thus, both embodiments may be implemented in one device, for example. Further, by use of configuration parameters, allocation of corresponding memories, interpolation units and MACs can be executed dynamically and in view of current application of the device. For example, if noise cancellation according to embodiment of FIG. 1 is preferred, a corresponding allocation of necessary components, e.g., memories, interpolation units and MACs will be executed in view of correspondingly arranged configuration settings. If, in turn, noise cancellation according to embodiment of FIG. 5 is preferred, a corresponding allocation of necessary components, e.g., memories and MACs will be executed in view of correspondingly arranged configuration settings. As mentioned, an allocation of necessary components can be done also with regard to both embodiments, such that both ways of noise cancellation can be executed in parallel and/or sequentially. According to an embodiment, static random-access memories (SRAMs) can be used for allocating said memories, wherein the use of further kinds of memories is also possible and supported.

Further, although the invention has been shown and described with respect to certain preferred embodiments, equivalents and modifications will occur to others skilled in the art upon the reading and understanding of the specification. The present invention includes all such equivalents and modifications, and is limited only by the scope of the claims.

## Claims

1. A device arranged to cancel noise present in received signals, wherein the device comprises:
a configuration unit (51), wherein the configuration unit (51) is configured to perform a base configuration or re-configuration of the device for subsequent noise cancellation, wherein the configuration unit is arranged to select at least one of the following and to configure the device by use of at least one of the following:
- a number of victims, with regard to which the device can execute the cancellation of noise during the same noise cancellation process;
- a number of tones, with regard to which the device can execute the cancellation of noise during the same noise cancellation process;
- a number of disturbers, with regard to which the device can execute the cancellation of noise during the same noise cancellation process;
- a number of received signals comprising noise, with regard to which the device can execute the cancellation of noise during the same noise cancellation process;
- one or more of a noisy signal sample memory (53), wherein the noisy sample memory (53) is configured to store samples of a corresponding received signal;
- one or more of a coefficient memory (52), wherein the coefficient memory is configured to provide noise cancellation coefficients that are used for noise cancellation in a particular or corresponding received signal comprising noise; and
- one or more of a filtered sample memory, wherein the filtered sample memory (56) is configured to store results of noise cancellation executed with regard to a corresponding received signal.
wherein the device comprises one or more of an interpolation unit (14) that is configured to use a base set of noise cancellation coefficients for generating or constructing further intermediate noise cancellation coefficients.

2. The device of claim 1, wherein the device comprises one or more sets of Multiply-And-Accumulate, MAC, units (55), wherein each set of MAC units (55) is configured to refer to or operate with regard to a corresponding received signal.

3. The device of any one of claims 1-2, wherein each MAC unit of one or more of MAC units (55) is configured to, operating with regard to a particular or corresponding received signal, retrieve noisy signal sample data from noisy signal sample memory (53) that is configured to store samples of the corresponding signal and to retrieve noise cancellation coefficients from coefficient memory (52) that is configured to store coefficients with regard to the corresponding received signal.

4. The device of any one of claims 1-3, wherein each MAC unit of one or more MAC units (55) is configured to process the noise cancellation coefficients and noisy signal samples for canceling noise of the corresponding received signal.

5. The device of any one of claims 1-4, wherein each MAC unit is configured to return filtered samples as the result of noise cancellation by the MAC unit, further wherein filtered sample memory (56) that refers to a received signal, with regard to which the corresponding MAC unit operates, is configured to then store the filtered samples.

6. The device of any one of claims 1-5, wherein the device is configured to apply the noise cancellation to signals received in time domain, or to signals received in frequency domain.

7. The device of any one of claims 1-6, wherein the number of coefficient memories (52) corresponds to or equals the maximum number of received signals that may be handled by device (5) during the same noise cancellation process.

8. The device of any one of claims 1-7, wherein the number of noisy signal sample memories (53) corresponds to or equals the maximum number of received signals that may be handled by device (5) during the same noise cancellation process.

9. The device of any one of claims 1-8, wherein the number of multiply-and-accumulate units corresponds to or equals the maximum number of received signals that may be handled by device (5) during the same noise cancellation process.

10. The device according to any one of claims 1-9, wherein the configuration unit is arranged to select at least one of the following and to configure the device by use of at least one of the following:
an interpolation factor;
an interpolation mode;
a precision degree of data to be supported by the device;
settings for compression of data when said data is stored in the device and settings for decompression of stored data when said stored data is used in the device.

11. A method for cancelling noise present in received signals, wherein the method comprises:
performing a base configuration or re-configuration of a device for subsequent noise cancellation; wherein performing the base configuration or re-configuration configures the device by use of at least one of the following:
- a number of victims, with regard to which the device can execute the cancellation of noise during the same noise cancellation process;
- a number of tones, with regard to which the device can execute the cancelation of noise during the same noise cancellation process;
- a number of disturbers, with regard to which the device can execute the cancellation of noise during the same noise cancellation process;
- a number of received signals comprising noise, with regard to which the device can execute the cancellation of noise during the same noise cancellation process;
- storing samples of a corresponding received signal in one or more of a noisy signal sample memory (53) of the device;
- providing noise cancellation coefficients that are used for noise cancellation in a particular or corresponding received signal comprising noise by one or more of a coefficient memory (52) of the device; and
- storing results of noise cancellation executed with regard to a corresponding received signal in one or more of a filtered sample memory (56) of the device,
wherein the device comprises one or more of an interpolation unit (14) using a base set of noise cancellation coefficients for generating or constructing further intermediate noise cancellation coefficients.

12. The method of claim 11, wherein the method uses one or more sets of Multiply-And-Accumulate, MAC, units (55) of the device, wherein each set of MAC units (55) refers to or operates with regard to a corresponding received signal.

13. The method of any one of claims 11-12, wherein each MAC unit of one or more of MAC units (55), operating with regard to a particular or corresponding received signal, retrieves noisy signal sample data from noisy signal sample memory (53) that stores samples of the corresponding signal and retrieves noise cancellation coefficients from coefficient memory (52) storing coefficients with regard to the corresponding received signal.

14. The method of any one of claims 11-13, wherein each MAC unit of one or more MAC units (55) processes the noise cancellation coefficients and noisy signal samples for canceling noise of the corresponding received signal.

15. The method of any one of claims 11-14, wherein each MAC unit returns filtered samples as the result of noise cancellation by the MAC unit, further wherein the filtered samples are then stored in filtered sample memory (56) that refers to a received signal, with regard to which the corresponding MAC unit operates.

16. The method of any one of claims 11-15, wherein the noise cancellation is applied to signals received in time domain, or to signals received in frequency domain.

17. The method according to any one of claims 11-16, wherein performing the base configuration or re-configuration configures the device by use of at least one of the following:
an interpolation factor;
an interpolation mode;
a precision degree of data to be supported by the device;
settings for compression of data when said data is stored in the device and settings for decompression of stored data when said stored data is used in the device.

18. A computer program product comprising a program code, which, when executed on a processor, causes execution of the method of any one of claims 11-17.

## Patentansprüche

1. Vorrichtung, die zur Unterdrückung von in empfangenen Signalen vorhandenen Rauschen angeordnet ist, wobei die Vorrichtung umfasst:
eine Konfigurationseinheit (51), wobei die Konfigurationseinheit (51) dazu konfiguriert ist, eine Basiskonfiguration oder Neukonfiguration der Vorrichtung für eine nachfolgende Rauschunterdrückung durchzuführen, wobei die Konfigurationseinheit dazu angeordnet ist, mindestens eines der folgenden Elemente auszuwählen und die Vorrichtung unter Verwendung mindestens eines der folgenden Elemente zu konfigurieren:
- eine Anzahl von Opfern, bezüglich derer die Vorrichtung die Rauschunterdrückung während desselben Rauschunterdrückungsprozesses ausführen kann;
- eine Anzahl von Tönen, bezüglich derer die Vorrichtung die Rauschunterdrückung während desselben Rauschunterdrückungsprozesses ausführen kann;
- eine Anzahl von Störquellen, bezüglich derer die Vorrichtung die Rauschunterdrückung während desselben Rauschunterdrückungsprozesses ausführen kann;
- eine Anzahl von empfangenen Signalen, die Rauschen umfassen, bezüglich derer die Vorrichtung die Rauschunterdrückung während desselben Rauschunterdrückungsprozesses ausführen kann;
- einen oder mehrere von einem Rauschsignalabtastwertspeicher (53), wobei der Rauschsignalabtastwertspeicher (53) konfiguriert ist, um Abtastwerte eines entsprechenden empfangenen Signals zu speichern;
- einen oder mehrere von einem Koeffizientenspeicher (52), wobei der Koeffizientenspeicher konfiguriert ist, um Rauschunterdrückungskoeffizienten bereitzustellen, die zur Rauschunterdrückung in einem bestimmten oder entsprechenden empfangenen Signal verwendet werden, das Rauschen umfasst; und
- einen oder mehrere von einem gefilterten Abtastwertspeichers, wobei der gefilterte Abtastwertspeicher (56) dazu konfiguriert ist, Ergebnisse einer Rauschunterdrückung zu speichern, die bezüglich eines entsprechenden empfangenen Signals ausgeführt wird.
wobei die Vorrichtung eine oder mehrere von einer Interpolationseinheit (14) umfasst, die dazu konfiguriert ist,
einen Basissatz von Rauschunterdrückungskoeffizienten zum Erzeugen oder Bauen weiterer Zwischenrauschunterdrückungskoeffizienten zu verwenden.

2. Vorrichtung nach Anspruch 1, wobei die Vorrichtung einen oder mehrere Sätze von Multiply-And-Accumulate, MAC, -Einheiten (55) umfasst, wobei jeder Satz von MAC-Einheiten (55) dazu konfiguriert ist, sich auf ein entsprechendes empfangenes Signal zu beziehen oder bezüglich dieses zu arbeiten.

3. Vorrichtung nach einem der Ansprüche 1-2, wobei jede MAC-Einheit einer oder mehrerer der MAC-Einheiten (55) dazu konfiguriert ist, indem sie bezüglich eines bestimmten oder entsprechenden empfangenen Signals arbeitet, Rauschsignalabtastwertdaten aus einem Rauschsignalabtastwertspeicher (53) abzurufen, der dazu konfiguriert ist, Abtastwerte des entsprechenden Signals zu speichern, und Rauschunterdrückungskoeffizienten aus einem Koeffizientenspeicher (52) abzurufen, der dazu konfiguriert ist, Koeffizienten bezüglich des entsprechenden empfangenen Signals zu speichern.

4. Vorrichtung nach einem der Ansprüche 1-3, wobei jede MAC-Einheit einer oder mehrerer MAC-Einheiten (55) dazu konfiguriert ist, die Rauschunterdrückungskoeffizienten und Rauschsignalabtastwerte zur Rauschunterdrückung des entsprechenden empfangenen Signals zu verarbeiten.

5. Vorrichtung nach einem der Ansprüche 1-4, wobei jede MAC-Einheit konfiguriert ist, um gefilterte Abtastwerte als Ergebnis der Rauschunterdrückung durch die MAC-Einheit zurückzugeben, wobei ferner der gefilterte Abtastwertspeicher (56), der sich auf ein empfangenes Signal bezieht, bezüglich dessen die entsprechende MAC-Einheit arbeitet, konfiguriert ist, um dann die gefilterten Abtastwerte zu speichern.

6. Vorrichtung nach einem der Ansprüche 1-5, wobei die Vorrichtung dazu konfiguriert ist, die Rauschunterdrückung auf Signale, die im Zeitbereich empfangen werden, oder auf Signale, die im Frequenzbereich empfangen werden, anzuwenden.

7. Vorrichtung nach einem der Ansprüche 1-6, wobei die Anzahl von Koeffizientenspeichern (52) der maximalen Anzahl von empfangenen Signalen entspricht oder gleich dieser ist, die von der Vorrichtung (5) während desselben Rauschunterdrückungsprozesses behandelt werden können.

8. Vorrichtung nach einem der Ansprüche 1-7, wobei die Anzahl von Rauschsignalabtastwertspeichern (53) der maximalen Anzahl von empfangenen Signalen entspricht oder gleich dieser ist, die von der Vorrichtung (5) während desselben Rauschunterdrückungsprozesses behandelt werden können.

9. Vorrichtung nach einem der Ansprüche 1-8, wobei die Anzahl von Multiply-And-Accumulate-Einheiten der maximalen Anzahl von empfangenen Signalen entspricht oder gleich dieser ist, die von der Vorrichtung (5) während desselben Rauschunterdrückungsprozesses behandelt werden können.

10. Vorrichtung nach einem der Ansprüche 1-9, wobei die Konfigurationseinheit angeordnet ist, um mindestens eines der folgenden Elemente auszuwählen und die Vorrichtung unter Verwendung von mindestens einem der folgenden Elemente zu konfigurieren:
einen Interpolationsfaktor;
einen Interpolationsmodus;
einen Präzisionsgrad der Daten, die von der Vorrichtung unterstützt werden sollen;
Einstellungen für die Komprimierung von Daten, wenn die Daten in der Vorrichtung gespeichert werden, sowie Einstellungen für die Dekomprimierung von gespeicherten Daten, wenn die gespeicherten Daten in der Vorrichtung verwendet werden.

11. Verfahren zur Unterdrückung von in empfangenen Signalen vorhandenen Rauschen, wobei das Verfahren folgende Schritte umfasst:
Durchführen einer Basiskonfiguration oder Neukonfiguration einer Vorrichtung für eine nachfolgende Rauschunterdrückung;
wobei das Durchführen der Basiskonfiguration oder Neukonfiguration die Vorrichtung unter Verwendung von mindestens einem der Folgenden konfiguriert:
- eine Anzahl von Opfern, bezüglich derer die Vorrichtung die Rauschunterdrückung während desselben Rauschunterdrückungsprozesses ausführen kann;
- eine Anzahl von Tönen, bezüglich derer die Vorrichtung die Rauschunterdrückung während desselben Rauschunterdrückungsprozesses ausführen kann;
- eine Anzahl von Störquellen, bezüglich derer die Vorrichtung die Rauschunterdrückung während desselben Rauschunterdrückungsprozesses ausführen kann;
- eine Anzahl von empfangenen Signalen, die Rauschen umfassen, bezüglich derer die Vorrichtung die Rauschunterdrückung während desselben Rauschunterdrückungsprozesses ausführen kann;
- Speichern von Abtastwerten eines entsprechenden empfangenen Signals in einem oder mehreren eines Rauschsignalabtastwertspeichers (53) der Vorrichtung;
- Bereitstellen von Rauschunterdrückungskoeffizienten, die zur Rauschunterdrückung in einem bestimmten oder entsprechenden empfangenen Signal verwendet werden, das Rauschen umfasst, durch einen oder mehrere eines Koeffizientenspeichers (52) der Vorrichtung; und
- Speichern von Ergebnissen der Rauschunterdrückung, die bezüglich eines entsprechenden empfangenen Signals ausgeführt wird, in einem oder mehreren eines gefilterten Abtastwertspeichers (56) der Vorrichtung;
wobei die Vorrichtung eine oder mehrere von einer Interpolationseinheit (14) umfasst, die einen Basissatz von Rauschunterdrückungskoeffizienten zum Erzeugen oder Konstruieren weiterer Zwischenrauschunterdrückungskoeffizienten verwendet.

12. Verfahren nach Anspruch 11, wobei das Verfahren einen oder mehrere Sätze von Multiply-And-Accumulate, MAC, -Einheiten (55) der Vorrichtung verwendet, wobei sich jeder Satz von MAC-Einheiten (55) auf ein entsprechendes empfangenes Signal bezieht oder bezüglich dieses arbeitet.

13. Verfahren nach einem der Ansprüche 11-12, wobei jede MAC-Einheit einer oder mehrerer der MAC-Einheiten (55), die bezüglich eines bestimmten oder entsprechenden empfangenen Signals arbeitet, Rauschsignalabtastwertdaten aus dem Rauschsignalabtastwertspeicher (53) abruft, der Abtastwerte des entsprechenden Signals speichert, und Rauschunterdrückungskoeffizienten aus dem Koeffizientenspeicher (52) abruft, der Koeffizienten bezüglich des entsprechenden empfangenen Signals speichert.

14. Verfahren nach einem der Ansprüche 11-13, wobei jede MAC-Einheit einer oder mehrerer MAC-Einheiten (55) die Rauschunterdrückungskoeffizienten und Rauschsignalabtastwerte zur Rauschunterdrückung des entsprechenden empfangenen Signals verarbeitet.

15. Verfahren nach einem der Ansprüche 11-14, wobei jede MAC-Einheit gefilterte Abtastwerte als Ergebnis der Rauschunterdrückung durch die MAC-Einheit zurückgibt, wobei ferner die gefilterten Abtastwerte dann in einem gefilterten Abtastwertspeicher (56) gespeichert werden, der sich auf ein empfangenes Signal bezieht, bezüglich dessen die entsprechende MAC-Einheit arbeitet.

16. Verfahren nach einem der Ansprüche 11-15, wobei die Rauschunterdrückung auf Signale angewendet wird, die im Zeitbereich empfangen werden, oder auf Signale, die im Frequenzbereich empfangen werden.

17. Verfahren nach einem der Ansprüche 11-16, wobei das Durchführen der Basiskonfiguration oder Neukonfiguration die Vorrichtung unter Verwendung von mindestens einem der folgenden Elemente konfiguriert:
einen Interpolationsfaktor;
einen Interpolationsmodus;
einen Präzisionsgrad der Daten, die von der Vorrichtung unterstützt werden sollen;
Einstellungen für die Komprimierung von Daten, wenn die Daten in der Vorrichtung gespeichert werden, sowie Einstellungen für die Dekomprimierung von gespeicherten Daten, wenn die gespeicherten Daten in der Vorrichtung verwendet werden.

18. Computerprogrammprodukt, umfassend einen Programmcode, der, wenn er auf einem Prozessor ausgeführt wird, die Ausführung des Verfahrens nach einem der Ansprüche 11-17 bewirkt.

## Revendications

1. Dispositif agencé pour supprimer un bruit présent dans des signaux reçus, dans lequel le dispositif comprend :
une unité de configuration (51), dans lequel l'unité de configuration (51) est configurée pour réaliser une configuration de base ou une reconfiguration du dispositif en vue d'une suppression de bruit ultérieure, dans lequel l'unité de configuration est agencée pour sélectionner au moins l'un des éléments suivants et pour configurer le dispositif à l'aide d'au moins l'un des éléments suivants :
- un nombre de victimes, pour lesquelles l'appareil peut effectuer la suppression de bruit au cours du même processus de suppression de bruit ;
- un nombre de fréquences, pour lesquelles l'appareil peut effectuer la suppression de bruit au cours du même processus de suppression de bruit ;
- un nombre de sources de bruit, pour lesquelles l'appareil peut effectuer la suppression de bruit au cours du même processus de suppression de bruit ;
- un nombre de signaux reçus contenant du bruit, pour lesquels le dispositif peut effectuer la suppression de bruit au cours du même processus de suppression de bruit ;
- une ou plusieurs mémoires d'échantillons de signaux bruités (53), dans lequel la mémoire d'échantillons de signaux bruités (53) est configurée pour stocker des échantillons d'un signal reçu correspondant ;
- une ou plusieurs mémoires de coefficients (52), dans lequel la mémoire de coefficients est configurée pour fournir des coefficients de suppression de bruit qui sont utilisés pour la suppression de bruit dans un signal reçu particulier ou correspondant comportant du bruit ; et
- une ou plusieurs mémoires d'échantillons filtrés, dans lequel la mémoire d'échantillons filtrés (56) est configurée pour stocker des résultats d'une suppression de bruit effectuée sur un signal reçu correspondant,
dans lequel le dispositif comprend une ou plusieurs unités d'interpolation (14) qui est configurée pour utiliser un ensemble de base de coefficients de suppression de bruit afin de générer ou de construire d'autres coefficients de suppression de bruit intermédiaires.

2. Dispositif selon la revendication 1, dans lequel le dispositif comprend un ou plusieurs ensembles d'unités de multiplication-accumulation (MAC) (55), dans lequel chaque ensemble d'unités MAC (55) est configuré pour faire référence ou pour fonctionner par rapport à un signal reçu correspondant.

3. Dispositif selon l'une quelconque des revendications 1 à 2, dans lequel chaque unité MAC des une ou plusieurs unités MAC (55) est configurée pour, en fonctionnant par rapport à un signal reçu particulier ou correspondant, récupérer des données d'échantillons de signal bruité à partir d'une mémoire d'échantillons de signal bruité (53) qui est configurée pour stocker des échantillons du signal correspondant, et récupérer des coefficients de suppression de bruit à partir d'une mémoire de coefficients (52) qui est configurée pour stocker des coefficients par rapport au signal reçu correspondant.

4. Dispositif selon l'une quelconque des revendications 1 à 3, dans lequel chaque unité MAC des une ou plusieurs unités MAC (55) est configurée pour traiter les coefficients de suppression de bruit et les échantillons de signal bruité pour supprimer le bruit du signal reçu correspondant.

5. Dispositif selon l'une quelconque des revendications 1 à 4, dans lequel chaque unité MAC est configurée pour renvoyer des échantillons filtrés comme résultat de la suppression de bruit par l'unité MAC, dans lequel, en outre, la mémoire d'échantillons filtrés (56), qui fait référence à un signal reçu par rapport auquel l'unité MAC correspondante fonctionne, est configurée pour stocker ensuite les échantillons filtrés.

6. Dispositif selon l'une quelconque des revendications 1 à 5, dans lequel le dispositif est configuré pour appliquer la suppression de bruit à des signaux reçus dans le domaine temporel ou à des signaux reçus dans le domaine fréquentiel.

7. Dispositif selon l'une quelconque des revendications 1 à 6, dans lequel le nombre de mémoires de coefficients (52) correspond ou est égal au nombre maximal de signaux reçus qui peuvent être gérés par le dispositif (5) au cours du même processus de suppression de bruit.

8. Dispositif selon l'une quelconque des revendications 1 à 7, dans lequel le nombre de mémoires d'échantillons de signal bruité (53) correspond ou est égal au nombre maximal de signaux reçus qui peuvent être gérés par le dispositif (5) au cours d'un même processus de suppression de bruit.

9. Dispositif selon l'une quelconque des revendications 1 à 8, dans lequel le nombre d'unités de multiplication-accumulation correspond ou est égal au nombre maximal de signaux reçus qui peuvent être gérés par le dispositif (5) au cours du même processus de suppression de bruit.

10. Dispositif selon l'une quelconque des revendications 1 à 9, dans lequel l'unité de configuration est agencée pour sélectionner au moins l'un des éléments suivants et pour configurer le dispositif à l'aide d'au moins l'un des éléments suivants :
un facteur d'interpolation ;
un mode d'interpolation ;
un niveau de précision de données devant être pris en charge par le dispositif ;
des paramètres de compression de données lorsque lesdites données sont stockées dans le dispositif, et des paramètres de décompression des données stockées lorsque lesdites données stockées sont utilisées dans le dispositif.

11. Procédé de suppression d'un bruit présent dans des signaux reçus, dans lequel le procédé comprend :
la réalisation d'une configuration de base ou d'une reconfiguration d'un dispositif en vue d'une suppression de bruit ultérieure ; dans lequel la réalisation de la configuration de base ou de la reconfiguration configure le dispositif à l'aide d'au moins l'un des éléments suivants :
- un nombre de victimes, pour lesquelles l'appareil peut effectuer la suppression de bruit au cours du même processus de suppression de bruit ;
- un nombre de fréquences, pour lesquelles l'appareil peut effectuer la suppression de bruit au cours du même processus de suppression de bruit ;
- un nombre de sources de bruit, pour lesquelles l'appareil peut effectuer la suppression de bruit au cours du même processus de suppression de bruit ;
- un nombre de signaux reçus contenant du bruit, pour lesquels le dispositif peut effectuer la suppression de bruit au cours du même processus de suppression de bruit ;
- le stockage d'échantillons d'un signal reçu correspondant dans une ou plusieurs mémoires d'échantillons de signal bruité (53) du dispositif ;
- la fourniture de coefficients de suppression du bruit qui sont utilisés pour la suppression de bruit dans un signal reçu particulier ou correspondant comportant du bruit par une ou plusieurs mémoires de coefficients (52) du dispositif ; et
- le stockage de résultats de suppression du bruit exécutée par rapport à un signal reçu correspondant dans une ou plusieurs mémoires d'échantillons filtrés (56) du dispositif,
dans lequel le dispositif comprend une ou plusieurs unités d'interpolation (14) utilisant un ensemble de base de coefficients de suppression de bruit pour générer ou construire d'autres coefficients de suppression de bruit intermédiaires.

12. Procédé selon la revendication 11, dans lequel le procédé utilise un ou plusieurs ensembles d'unités de multiplication-accumulation, MAC, (55) du dispositif, dans lequel chaque ensemble d'unités MAC (55) fait référence ou fonctionne par rapport à un signal reçu correspondant.

13. Procédé selon l'une quelconque des revendications 11 à 12, dans lequel chaque unité MAC des une ou plusieurs unités MAC (55), en fonctionnant par rapport à un signal reçu particulier ou correspondant, récupère des données d'échantillons de signal bruité à partir d'une mémoire d'échantillons de signal bruité (53) qui stocke des échantillons du signal correspondant et récupère des coefficients de suppression de bruit à partir d'une mémoire de coefficients (52) stockant des coefficients par rapport au signal reçu correspondant.

14. Procédé selon l'une quelconque des revendications 11 à 13, dans lequel chaque unité MAC des une ou plusieurs unités MAC (55) traite les coefficients de suppression de bruit et les échantillons de signal bruité pour supprimer le bruit du signal reçu correspondant.

15. Procédé selon l'une quelconque des revendications 11 à 14, dans lequel chaque unité MAC renvoie des échantillons filtrés comme résultat de la suppression de bruit par l'unité MAC, dans lequel, en outre, les échantillons filtrés sont ensuite stockés dans une mémoire d'échantillons filtrés (56) qui fait référence à un signal reçu, pour lequel l'unité MAC correspondante fonctionne.

16. Procédé selon l'une quelconque des revendications 11 à 15, dans lequel la suppression de bruit est appliquée à des signaux reçus dans le domaine temporel ou à des signaux reçus dans le domaine fréquentiel.

17. Procédé selon l'une quelconque des revendications 11 à 16, dans lequel la réalisation de la configuration de base ou de la reconfiguration configure le dispositif à l'aide d'au moins l'un des éléments suivants :
un facteur d'interpolation ;
un mode d'interpolation ;
un niveau de précision de données devant être pris en charge par le dispositif ;
des paramètres de compression de données lorsque lesdites données sont stockées dans le dispositif, et des paramètres de décompression de données stockées lorsque lesdites données stockées sont utilisées dans le dispositif.

18. Produit de programme informatique comprenant un code de programme qui, lorsqu'il est exécuté sur un processeur, entraîne l'exécution du procédé selon l'une quelconque des revendications 11 à 17.
